# EUROPÄISCHE PATENTANMELDUNG

(11) **EP 0 715 428 A2**
(43) Veröffentlichungstag der Anmeldung: **05.06.1996**
(21) Anmeldenummer: 95118410.0
(22) Anmeldetag: 23.11.1995
(51) Int. Cl.: H04J 3/14

(54) **Synchronisierungsüberwachung in einem Netzelement**

(30) Priorität: 30.11.1994 DE 4442506
(71) Anmelder: Alcatel SEL Aktiengesellschaft, D-70435 Stuttgart (DE)
(72) Erfinder: Wolf, Michael, Dr., D-74395 Mundelsheim (DE)
(74) Vertreter: Schätzle, Albin, Dipl.-Phys.

(57) **Zusammenfassung**

Bei digitalen Übertragungssystemen, z.B. einem synchronen Übertragungssystem gemäß dem SDH/SONET-Standard, besteht das Interesse, Kenntnis über den Synchronisierungszustand des Übertragungssystems zu haben. Eine bekannte Vorgehensweise ist die Überwachung der Zeigeraktivität. Nachteilig daran ist, daß aus der Zeigeraktivität gewonnene Information wegen einer Hysterese im Zeigerprozessor nur bedingt den Synchronisierungszustand widerspiegelt.

Bei einem erfindungsgemäßen Netzelement (1), das in einem o.g. Übertragungssystem vorhanden ist, hat mindestens eine Schnittstelleneinrichtung (2, 3, 4) neben einem optoelektrischen Wandler (5) eine Synchronisierungsüberwachungseinrichtung (6), die aus einem Vergleich einer externen Taktfrequenz (Tₑ) mit einer internen Taktfrequenz (Tᵢ) einen Synchronisierungszustandsparameter, z.B. TIE, RMSTIE, ableitet. Dafür hat die Synchronisierungsüberwachungseinrichtung (6) eine Phasenvergleichseinrichtung (37), eine Speichereinrichtung (25) und eine Auswerteeinrichtung (26).

## Beschreibung

Die Erfindung betrifft ein Netzelement für ein digitales Übertragungssystem gemäß dem Oberbegriff des Anspruchs 1 oder 2.

Ein solches digitales Übertragungssystem ist z.B. ein synchrones Übertragungssystem gemäß dem SDH/SONET-Standard. In einem solchen digitalen Übertragungssystem sind einzelne Netzelemente durch unterschiedliche Übertragungsmedien (z.B. Kupferkabel, Lichtwellenleiter oder Funkstrecken) miteinander verbunden.

Eine Anbindung eines Netzelements an ein Übertragungsmedium erfolgt durch Schnittstelleneinrichtungen (network node interface), die z.B. aus den ITU-T Empfehlungen G.703 und G.957 bekannt sind. In der Empfehlung G.703 sind Festlegungen von elektrischen Eigenschaften solcher Schnittstelleneinrichtungen und in der Empfehlung G.957 sind Festlegungen von optischen Eigenschaften der Schnittstelleneinrichtungen angegeben. In einer Schnittstelleneinrichtung, die an einen Lichtwellenleiter angeschlossen ist, werden z.B. ankommende optische Signale durch einen optoelektrischen Wandler in elektrische Signale gewandelt. Dem entsprechend werden abgehende elektrische Signale durch einen elektrooptischen Wandler in optische Signale gewandelt. Bei einer solchen Wandlung ändert sich die Taktfrequenz des entsprechenden Signals nicht.

In jedem Netzelement, das z.B. ein Crossconnect ist, ist eine interne Taktfrequenz festgelegt, die als Taktreferenz dient. Abweichungen der Taktfrequenz eines ankommenden Signals von dieser internen Taktfrequenz geben Aufschluß über den Synchronisierungszustand des Übertragungssystems. Einen Überblick über die Thematik der Synchronisierung gibt der Artikel von M. Wolf et al, "Synchronisierung und Timing", in Elektrisches Nachrichtenwesen (Alcatel), 4. Quartal 1993, Seiten 349 bis 358.

Um den Synchronisierungszustand zu überwachen, ist es bekannt (Report der ETSI-TM3 Tagung in Bristol, Oktober 1992, Seite 205), die Zeigeraktivität (Pointer activity) zu überwachen. Eine Überwachung des Synchronisierungszustandes mit Hilfe der Zeigeraktivität ist in der technischen Anweisung von Bellcore TA-NWT-000 436 gefordert. Nachteilig daran ist, daß die aus der Zeigeraktivität gewonnene Information aufgrund einer mit dem Zeiger-Prozessor verbundenen nicht standardisierten Hysterese nur eingeschränkt Aussagen über den Synchronisierungszustand zuläßt.

Der Erfindung liegt die Aufgabe zugrunde, ein Netzelement für ein digitales Übertragungssystem anzugeben, bei dem die Überwachung des Synchronisierungszustandes auf eine andere Art erfolgt. Ein die Aufgabe lösendes Netzelement ist Gegenstand des Anspruchs 1. Ein weiteres die gleiche Aufgabe lösendes Netzelement ist Gegenstand des Anspruchs 2. Ausgestaltungen der Erfindung sind in den Unteransprüchen angegeben.

Ein Vorteil der Erfindung ist, daß frühzeitig Abweichungen von der Synchronisierung erkannt werden können, und daß daraufhin vorbeugende Maßnahmen ergriffen werden können.

Ein zweiter Vorteil der Erfindung ist, daß mit Hilfe des Synchronisierungszustands Entscheidungen vereinfacht werden, wie ein bestehendes Übertragungssystem, eventuell ohne eine Neuorganisation der Synchronisierungsarchitektur, erweitert werden kann.

Ein dritter Vorteil der Erfindung ist, daß ein Netzbetreiber kontinuierlich eine seinem Kunden zugesicherte Synchronisierungsqualität überprüfen kann.

Die Erfindung wird im folgenden beispielhaft anhand von Figuren näher erläutert. Es zeigen:
- Fig. 1: ein Blockschaltbild eines erfindungsgemäßen Netzelements mit einer Synchronisierungsüberwachungseinrichtung, und
- Fig. 2: eine schematische Darstellung einer Synchronisierungsüberwachungseinrichtung.

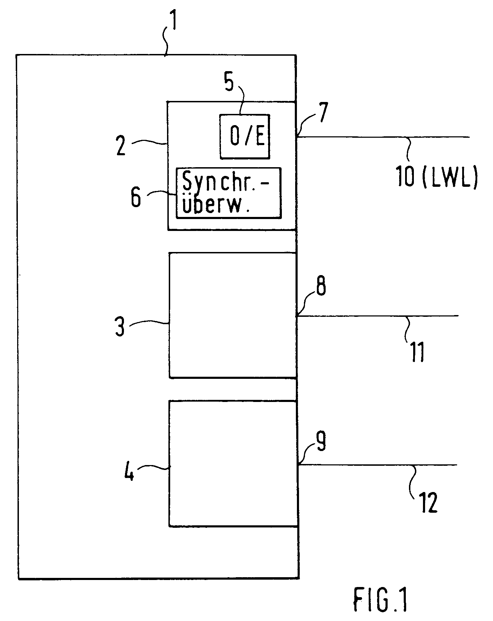

In Fig. 1 ist ein Blockschaltbild eines erfindungsgemäßen Netzelements 1 mit einer Synchronisierungsüberwachungseinrichtung 6 gezeigt. Dieses Netzelement 1 ist z.B. ein Crossconnect, der in einem Vermittlungsamt vorhanden ist. Das Netzelement 1 hat drei Schnittstelleneinrichtungen 2, 3, 4 die jeweils über Anschlüsse 7, 8, 9 mit einem Übertragungsmedium 10, 11, 12 verbunden sind. Die Schnittstelleneinrichtung 2, die einen optoelektrischen Wandler 5 und eine Synchronisierungsüberwachungseinrichtung 6 hat, ist durch den Anschluß 7 der Schnittstelleneinrichtung 2 mit einem Lichtwellenleiter 10 (Übertragungsmedium) verbunden.

Der optoelektrische Wandler 5 wandelt ein über den Lichtwellenleiter 10 ankommendes optisches Signal einer ersten Taktfrequenz Tₑ in ein diesem optischen Signal entsprechendes elektrisches Signal der gleichen Taktfrequenz Tₑ. Diese erste Taktfrequenz Te wird im folgenden als externe Taktfrequenz bezeichnet. Diese externe Taktfrequenz Tₑ kann u.U. im Netzelement 1 gemäß einem vorgegebenen Teilungsverhältnis geteilt werden. Trotz dieser Teilung ist aber immer ein eindeutiger Rückschluß auf die externe Taktfrequenz Tₑ möglich. Ein im folgenden noch zu erläuternder Vergleich wird davon nicht beeinflußt, d.h. auch nach der Teilung erfolgt ein Vergleich der externen Taktfrequenz Tₑ mit einer zweiten Taktfrequenz. Im Netzelement 1, und damit auch in den Schnittstelleneinrichtungen 2, 3, 4 ist eine gemeinsame zweite Taktfrequenz Tᵢ festgelegt, die im folgenden als interne Taktfrequenz bezeichnet wird.

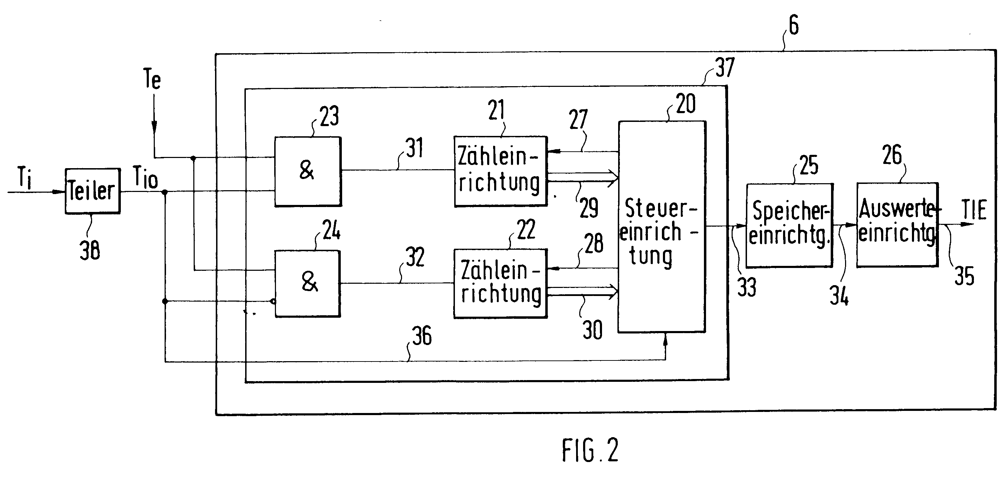

In Fig. 1 ist die Synchronisierungsüberwachungseinrichtung 6 in der Schnittstelleneinrichtung 2 vorhanden; die Synchronisierungsüberwachungseinrichtung kann aber auch in mindestens einer der anderen Schnittstelleneinrichtung 3, 4 vorhanden sein. Die Synchronisierungsüberwachungseinrichtung 6 ist in Figur 2 in einer schematischen Darstellung gezeigt. Die Synchronisierungsüberwachungseinrichtung 6 hat eine Phasenvergleichseinrichtung 37, eine Speichereinrichtung 25 und eine Auswertungseinrichtung 26. Die Phasenvergleichseinrichtung 37 hat zwei UND-Gatter 23, 24, zwei Zähleinrichtungen 21, 22 und eine Steuereinrichtung 20. Das UND-Gatter 23 ist durch eine Verbindung 31 mit der Zähleinrichtung 21 verbunden, und das UND-Gatter 24 ist durch eine Verbindung 32 mit der Zähleinrichtung 22 verbunden. Durch eine Datenverbindung 29 ist die Zähleinrichtung 21 und durch eine Datenverbindung 30 ist die Zähleinrichtung 22 mit der Steuereinrichtung 20 verbunden.

Die Steuereinrichtung 20 hat eine Verbindung 27 mit der Zähleinrichtung 21 und eine Verbindung 28 mit der Zähleinrichtung 22.

Ein Teiler 38 ist so ausgelegt, daß die interne Taktfrequenz Tᵢ auf eine Taktfrequenz Tᵢₒ reduziert wird. Diese Taktfrequenz Tᵢₒ gibt damit ein Zeitintervall vor. Der Teiler 38 kann an beliebiger Stelle des Netzelements angeordnet sein; in der Fig. 2 ist er außerhalb der Synchronisierungsüberwachungseinrichtung 6 angeordnet.

Da die Taktfrequenz Tᵢₒ aus der internen Taktfrequenz Tᵢ abgeleitet ist, ist auch der in der Phasenvergleichseinrichtung 37 erfolgende Vergleich der Taktfrequenz Tᵢₒ mit der evtl. geteilten externen Taktfrequenz Tₑ so zu verstehen, als ob ein Vergleich der internen Taktfrequenz Tᵢ mit der externen Taktfrequenz Tₑ erfolgen würde. Das UND-Gatter 23 hat die externe Taktfrequenz Tₑ und die Taktfrequenz Tᵢₒ als Eingangssignal. Das Signal mit der Taktfrequenz Tᵢₒ ist eine Folge von logischen Zuständen "0" und "1", die jeweils gleiche Zeitdauer haben. Das UND-Gatter 24 hat die externe Taktfrequenz Tₑ und die Taktfrequenz Tᵢₒ als Eingangssignal: Ein Eingang des UND-Gatters 24 ist ein invertierender Eingang, um das Signal mit der Taktfrequenz Tᵢₒ zu invertieren. Die Taktfrequenz Tᵢₒ ist außerdem der Steuereinrichtung 20 durch eine Verbindung 36 zugeführt.

Die Steuereinrichtung 20 der Phasenvergleichseinrichtung 37 ist durch eine Verbindung 33 mit der Speichereinrichtung 25 verbunden, die außerdem durch eine Verbindung 34 mit der Auswerteeinrichtung 26 verbunden ist. Die Auswerteeinrichtung ist ein Rechner (Computer), in dem ein Auswerteprogramm abläuft. Die Auswerteeinrichtung 26 ist Bestandteil der Synchronisierungsüberwachungseinrichtung 6, gleichgültig wo die Auswerteeinrichtung 26 angeordnet ist, d.h. sie kann in der Schnittstelleneinrichtung 2 (Fig. 1) oder in einer Überwachungszentrale angeordnet sein. Dort können Auswerteergebnisse (z.B. TIE) auf einem Bildschirm dargestellt werden. In der Fig. 2 ist dies durch einen an der Auswerteeinrichtung 26 eingezeichneten Pfeil 35 angedeutet.

Im folgenden wird die Funktionsweise der Synchroniserungsüberwachungseinrichtung 6 erläutert.

Wie bereits erwähnt, gibt die Taktfrequenz Tᵢₒ ein Zeitintervall vor, das z.B. 1,024 s beträgt. Ein Ausgang des UND-Gatters 23 hat nur dann einen logischen Zustand "1", wenn beide Eingangssignale (Tₑ, Tᵢₒ) einen logischen Zustand "1" haben. Die Zähleinrichtung 21 zählt, wie oft dies in dem Zeitintervall der Fall war. Um unterbrechungsfreie Messungen durchzuführen, ist das UND-Gatter 24 vorhanden, d.h. dadurch ist es möglich, auch dann einen Vergleich durchzuführen, wenn das Signal mit der Taktfrequenz Tᵢₒ einen logischen Zustand "0" hat. Die Zähleinrichtung 22 zählt somit auch hier, wie oft die Eingangssignale (Tₑ, Tᵢₒ) im Meßintervall gleich sind.

Der Steuereinrichtung 20 ist die Taktfrequenz Tᵢₒ zugeführt, so daß die Steuereinrichtung 20 die Zähleinrichtungen 21, 22 jeweils am Ende des Zeitintervalls abfragt, der Speichereinrichtung 25 die gezählten Impulse pro Zeitintervall (Zählerstand) übergibt und die Zähleinrichtungen 21, 22 zurücksetzt.

Die gezählten Impulse pro Zeitintervall sind ein Maß für die Taktfrequenz und damit auch ein Maß für eine zu bestimmende Taktfrequenzabweichung. Für eine Taktfrequenzabweichung von 4,6 ppm (parts per million) ist der Zählerstand um 733 Einheiten von einem Nominalwert entfernt. Die gezählten Impulse pro Zeitintervall stellen also von der Phasenvergleichseinrichtung 37 bestimmte Differenzwerte dar.

Um die Taktfrequenzabweichung zu bestimmen, ist es nicht notwendig, den absoluten Zählerstand zu kennen; es genügt die niedrigsten Stellen des Zählerstandes auszuwerten.

Daraus folgt, daß zwei Byte ausreichen, um den Zählerstand darzustellen.

Für eine Kurzzeit-Stabilitätsanalyse beträgt die gespeicherte Datenmenge z.B. 180 kbyte pro Tag. Für eine Langzeit-Stabilitätsanalyse ist es möglich, die Datenmenge um einen Faktor 10-1000 zu reduzieren, so daß sich z.B. 500-5 kbyte pro Monat ergeben.

Ist das festgelegte Zeitintervall 1,024 s lang, wird jeweils eine 16-stufige binäre Zähleinrichtung 21, 22 benötigt. Die in der Speichereinrichtung 25 gespeicherten Werte können durch die Auswerteeinrichtung 26 statistisch ausgewertet werden: Dazu fragt die Auswerteeinrichtung 26 die Speichereinrichtung 25 in festgelegten Zeitabständen ab, d.h. die Speichereinrichtung 25 wird gelesen (engl.: polling). Als Auswerteergebnis liegen dann statistische Synchronisierungszustandsparameter vor: Z.B. Time Intervall Error (TIE), Root Mean Square TIE (RMS TIE), Maximum Relative TIE (MRTIE) und Time Deviation (TDEV). Diese Parameter und deren Bestimmung sind bekannt z.B. aus dem bereits genannten Artikel von M. Wolf, vor allem Seiten 355 bis 357 oder aus der technischen Empfehlung von Bellcore TR-NWT-001244, vor allem Seiten 2-6 bis 2-9.

## Patentansprüche

1. Netzelement für ein digitales Übertragungssystem, mit mindestens einer Schnittstelleneinrichtung,
**dadurch gekennzeichnet**, daß die
Schnittstelleneinrichtung (2, 3, 4) eine Synchronisierungsüberwachungseinrichtung (6) hat, die eine erste Taktfrequenz (Tₑ) eines ankommenden Signals mit einer im Netzelement (1) festgelegten zweiten Taktfrequenz (Tᵢ) vergleicht, und daraus mindestens einen Synchronisierungszustandsparameter ableitet.

2. Netzelement für ein digitales Übertragungssystem mit mindestens einer Schnittstelleneinrichtung (2, 3, 4), die eine Einrichtung (5) zum Wandeln eines ankommenden optischen Signals einer ersten Taktfrequenz (Tₑ) in ein diesem optischen Signal entsprechendes elektrisches Signal der gleichen Taktfrequenz (Tₑ) hat, dadurch gekennzeichnet, daß die Schnittstelleneinrichtung (2) eine Synchronisierungsüberwachungseinrichtung (6) hat, die aus einem Vergleich der ersten Taktfrequenz (Tₑ) mit einer im Netzelement (1) festgelegten, zweiten Taktfrequenz (Tᵢ) mindestens einen Synchronisierungszustandsparameter ableitet.

3. Netzelement nach Anspruch 1 oder 2,
dadurch gekennzeichnet, daß die
Synchronisierungsüberwachungseinrichtung (6) aus einer Phasenvergleichseinrichtung (37), die innerhalb eines festgelegten Zeitintervalls die beiden Taktfrequenzen (Tᵢ, Tₑ) miteinander vergleicht, einer Speichereinrichtung (25), die von der Phasenvergleichseinrichtung (37) bestimmte Differenzwerte speichert, und einer Auswerteeinrichtung (26), die von der Speichereinrichtung in festgelegten Zeitabständen abgefragte Speicherwerte auswertet, besteht.

4. Netzelement nach Anspruch 3,
dadurch gekennzeichnet, daß die Phasenvergleichseinrichtung (37) mindestens eine Zähleinrichtung (21, 22) und eine Steuereinrichtung (20) hat, die die Zähleinrichtung (21, 22) in regelmäßige Zeitabständen abfragt und danach rücksetzt.

5. Netzelement nach Anspruch 4,
dadurch gekennzeichnet, daß die Zähleinrichtung (21, 22) ein 16-stufiger Zähler ist.
